# FASCICULE DE BREVET EUROPEEN

(11) **EP 1 469 166 B1**
(45) Date de publication et mention de la délivrance du brevet: **23.08.2006**
(21) Numéro de dépôt: 04291011.7
(22) Date de dépôt: 15.04.2004
(51) Int. Cl.: F01D 17/16

(54) **Dispositif de commande d'aubes à calage variable dans une turbomachine**
Antriebsvorrichtung für verstellbare Leitschaufeln einer Turbomaschine
Actuation mechanism for variable inlet vanes in a turbomachine

(30) Priorité: 16.04.2003 FR 0304735
(43) Date de publication de la demande: 20.10.2004
(73) Titulaire: SNECMA, 75015 Paris (FR)
(72) Inventeur: Raulin, Dominique, 77210 Avon (FR); Marois, Fabrice, 77000 Melun (FR); Chatel, Alain, 77000 Melun (FR); Bouron, Alain, 77127 Lieusaint (FR)
(74) Mandataire: Ramey, Daniel

(56) Documents cités:
- GB-A- 1 216 920
- US-A- 2 305 311
- US-A- 4 314 791
- US-A- 5 941 537

## Description

L'invention concerne un dispositif de commande d'aubes à calage variable dans une turbomachine telle notamment qu'un turbopropulseur ou un turboréacteur d'avion.

Le réglage du calage angulaire de certaines aubes de stator dans une telle turbomachine est destiné à optimiser le rendement de cette turbomachine et à réduire sa consommation de carburant dans les différentes configurations de vol. Ce réglage est en général réalisé, pour une ou plusieurs rangées d'aubes, au moyen d'un anneau de commande qui entoure extérieurement le stator de la turbomachine et qui est déplaçable en rotation autour de l'axe longitudinal du stator par un moyen moteur tel qu'un vérin ou un moteur électrique. La rotation de l'anneau est transmise par des biellettes aux aubes de la rangée, chaque biellette étant solidaire d'une aube à l'une de ses extrémités et portant à son autre extrémité un doigt radial qui est engagé dans un logement cylindrique de l'anneau de commande.

Dans les turbomachines d'une certaine puissance, le carter du stator est formé de deux coquilles semi-cylindriques comportant des brides longitudinales de jonction, qui sont en saillie à l'extérieur du carter. En raison de la présence de ces brides longitudinales, chaque anneau de commande est formé de deux éléments approximativement semi-circulaires reliés rigidement l'un à l'autre à leurs extrémités par deux pontets qui sont disposés à cheval sur les brides du carter et autorisent un débattement angulaire de l'anneau autour de l'axe longitudinal du carter. Un tel carter est divulgué dans le document GB-A-1 216 920.

Les doigts radiaux des biellettes s'étendent vers l'intérieur quand ils sont destinés à être reçus dans des logements des éléments sensiblement semi-circulaires de l'anneau, et s'étendent radialement vers l'extérieur quand ils sont destinés à être reçus dans des logements cylindriques des pontets, ces derniers étant plus écartés de l'axe longitudinal du carter que les éléments semi-circulaires de l'anneau.

Cela a pour conséquence que les points de rotation des biellettes reliées aux pontets sont plus éloignés de l'axe longitudinal du carter que les points de rotation des biellettes reliées aux éléments semi-circulaires de l'anneau et qu'un déplacement angulaire de l'anneau autour de l'axe du carter se traduit par une certaine rotation des aubes reliées par les biellettes aux éléments semi-circulaires de l'anneau et par une rotation un peu plus grande des aubes reliées par les biellettes aux pontets de l'anneau.

Ce réglage différent des aubes reliées aux pontets nuit à l'optimisation du rendement et à l'économie de carburant.

La présente invention a notamment pour but d'apporter une solution simple, efficace et peu coûteuse à ce problème.

Elle propose à cet effet un dispositif de commande d'aubes à calage variable dans une turbomachine, ces aubes comprenant des pivots radiaux montés dans des paliers d'un carter et reliés par des biellettes à un anneau de commande entourant extérieurement le carter, cet anneau comprenant deux éléments sensiblement semi-circulaires reliés rigidement l'un à l'autre à leurs extrémités par des pontets disposés à cheval sur des brides longitudinales du carter, caractérisé en ce que les biellettes sont montées à rotation sur des extrémités de doigts radiaux portés par les éléments semi-circulaires et par les pontets de l'anneau de commande et en ce que les doigts portés par les éléments semi-circulaires s'étendent radialement à l'extérieur de ces éléments, et les doigts portés par les pontets s'étendent radialement à l'intérieur de ces pontets de sorte que les points de rotation des biellettes sur ces doigts sont à une même distance de l'axe longitudinal de l'anneau, pour les doigts radiaux portés par les éléments semi-circulaires et pour ceux portés par le pontet de l'anneau de commande.

Grâce à ce montage, les points de rotation des biellettes sont situés dans les zones de contact entre les biellettes et les doigts radiaux, et non plus entre les doigts radiaux et leurs logements cylindriques, et on garantit qu'un déplacement angulaire de l'anneau se traduit par une même rotation de toutes les aubes de la rangée.

Selon une autre caractéristique de l'invention, les biellettes sont montées de façon rotulante sur les doigts radiaux.

Cela permet de réduire les contraintes et les déformations des biellettes lors du réglage du calage angulaire des aubes.

Dans un premier mode de réalisation, les doigts radiaux précités sont montés dans des logements cylindriques radiaux des éléments semi-circulaires et des pontets de l'anneau de commande et y sont maintenus par des pattes coudées fixées par des vis sur ces éléments et pontets, et coopérant avec les extrémités des doigts sur lesquelles sont montées les biellettes.

Dans un autre mode de réalisation de l'invention, les doigts radiaux précités sont sertis à leurs extrémités opposées aux biellettes dans des logements cylindriques des éléments semi-circulaires et des pontets de l'anneau de commande.

Ce montage se traduit par un gain de poids puisqu'il permet la suppression des pattes coudées précitées et de leurs vis de fixation sur les éléments semi-circulaires et les pontets de l'anneau de commande.

Eventuellement, des moyens de retenue des biellettes sont montés sur les doigts radiaux et comprennent des pièces en U dont les ailes comportent des orifices de passage des doigts radiaux et se trouvent de part et d'autre d'une collerette des doigts radiaux.

Ces moyens de retenue peuvent être des tôles légères qui n'augmentent pas le poids total de façon pénalisante.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 est une vue schématique partielle en coupe transversale d'un carter de turbomachine et d'un anneau de commande ;
- les figures 2 et 3 sont des vues partielles illustrant le montage des biellettes des aubes à calage variable sur un anneau de commande de la technique antérieure.
- la figure 4 est une vue schématique partielle illustrant un premier mode de réalisation du dispositif selon l'invention ;
- la figure 5 représente schématiquement une variante de réalisation de ce dispositif ;
- la figure 6 est une vue schématique en perspective du doigt radial du dispositif de la figure 5 ;
- la figure 7 représente schématiquement un autre mode de réalisation du dispositif selon l'invention ;
- la figure 8 est une vue schématique en perspective du doigt radial et des moyens de retenue de biellette du dispositif de la figure 7.

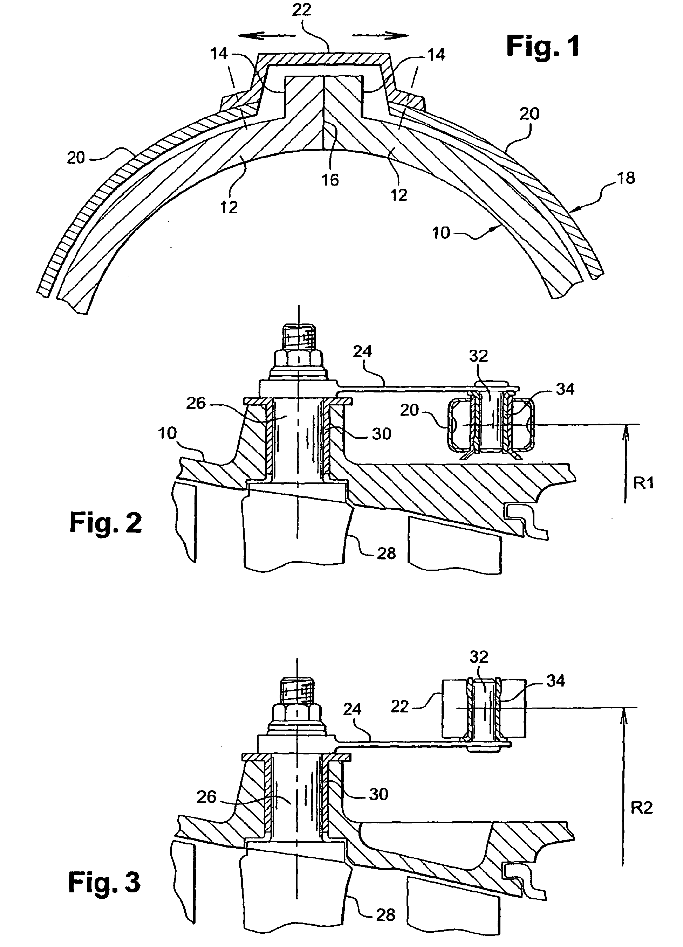

En figure 1, on a représenté très schématiquement, en coupe transversale, une partie d'un carter 10 de turbomachine, ce carter étant formé de deux demi-coquilles 12 comportant des brides longitudinales d'assemblage 14 appliquées l'une contre l'autre le long d'un plan de jonction 16 et faisant saillie sur l'extérieur du carter 10.

Un anneau 18 de commande de la position angulaire d'aubes à calage variable entoure extérieurement le carter 10 à proximité immédiate de ce dernier et est formé de deux éléments approximativement semi-circulaires qui sont reliés rigidement l'un à l'autre à leurs extrémités par deux pontets 22 dont un seul est représenté en figure 1, chaque pontet étant à cheval sur les brides longitudinales 14 du carter 10 et permettant un débattement angulaire de l'anneau 18 autour de son axe longitudinal, qui est sensiblement confondu avec l'axe longitudinal du carter 10.

Les moyens reliant cet anneau de commande à une rangée d'aubes à calage variable sont représentés schématiquement aux figures 2 et 3.

Ces moyens comprennent des biellettes 24 qui sont fixées par une extrémité sur des pivots radiaux 26 des aubes 28 à calage variable, ces pivots 26 étant guidés en rotation dans des paliers 30 montés dans des orifices radiaux du carter 10 . Les autres extrémités des biellettes 24 portent des doigts radiaux 32 qui sont par exemple sertis sur ces extrémités des biellettes et qui sont guidés en rotation dans des douilles cylindriques 34 montées dans des logements cylindriques de l'anneau de commande 18.

Lorsque les biellettes 24 sont reliées aux éléments semi-circulaires 20 de l'anneau 18 comme représenté en figure 2, les doigts 32 s'étendent radialement vers l'axe du carter 10 et les biellettes 24 sont radialement extérieures à ces éléments 20 semi-circulaires.

Du fait du guidage des doigts radiaux 32 dans les douilles cylindriques 34 qui ont une certaine longueur, il est difficile de définir avec précision une distance entre l'axe longitudinal du carter 10 et un point d'articulation des doigts radiaux 32 dans les douilles 34.

Si l'on considère en première approximation que ces points de rotation sont dans la zone médiane des doigts 32 et des douilles 34, par raison de symétrie, ces points de rotation sont alors à une distance R1 de l'axe longitudinal du carter 10.

Quand les biellettes 24 sont reliées à un pontet 22 de l'anneau de commande 18 comme représenté en figure 3, les doigts 32 s'étendent radialement vers l'extérieur par rapport aux biellettes 24 et les points de rotation des biellettes 24 peuvent de la même manière être approximativement situés au milieu des doigts 32 et des douilles 34 et à une distance R2 de l'axe de rotation de l'anneau de commande 18, R2 étant supérieure à R1.

Un déplacement angulaire de l'anneau de commande autour de son axe de rotation se traduit par une rotation des aubes 28 autour des axes des pivots 26 qui est proportionnelle à R1 pour les aubes qui sont reliées par les biellettes 24 aux éléments semi-circulaires 20 de l'anneau de commande 18, et qui est proportionnelle à R2 pour les aubes 28 reliées par les biellettes 24 aux pontets 22 de l'anneau de commande 18.

Cette différence de rotation des aubes 28 selon qu'elles sont reliées aux éléments 20 ou aux pontets 22 de l'anneau 18, contrarie l'optimisation du rendement de la turbomachine.

Pour pallier cet inconvénient, l'invention prévoit de monter les biellettes 24 à rotation sur des doigts radiaux 32 portés par les éléments semi-circulaires 20 et les pontets 22 de l'anneau de commande 18, les points de rotation des biellettes étant à une même distance de l'axe du carter.

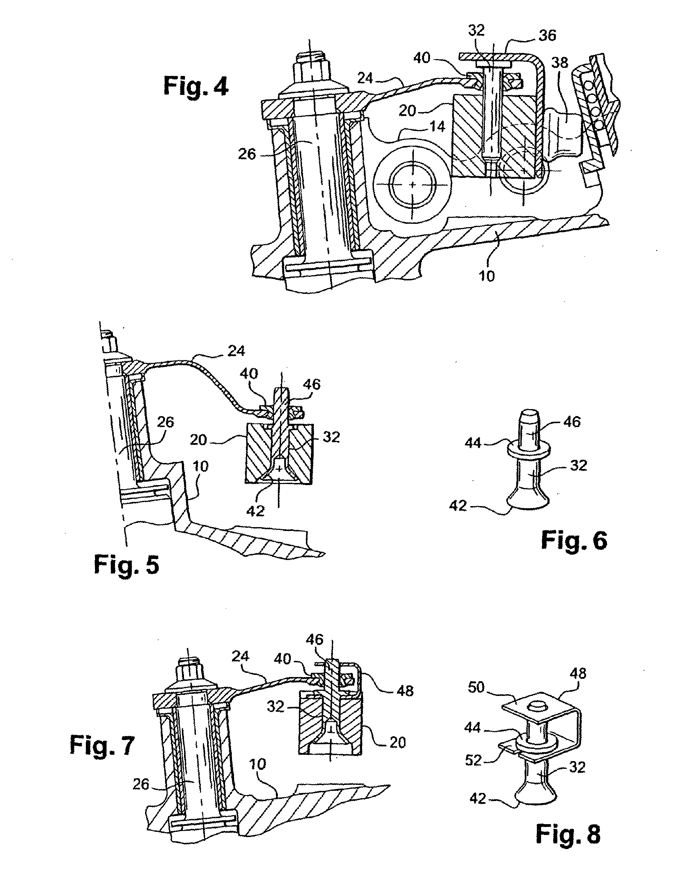

Dans le mode de réalisation représenté en figure 4, les doigts radiaux 32 sont engagés dans des logements cylindriques des éléments 20 de l'anneau de commande depuis les extrémités radialement extérieures de ces logements et sont maintenus en place par des pattes coudées 36 qui prennent appui sur les extrémités radialement externes des doigts 32 et qui sont fixées par des vis 38 sur les éléments 20 de l'anneau de commande. A leur extrémité radialement interne, les doigts 32 sont en appui sur un épaulement interne de leur logement cylindrique.

Les biellettes 24 sont solidaires des pivots radiaux 26 des aubes à calage variable à l'une de leurs extrémités et comportent à leur autre extrémité un orifice dans lequel est engagée une bague 40 traversée par le doigt radial 32 associé, la surface interne de la bague 40 étant évasée depuis sa partie médiane vers ses extrémités pour un montage rotulant de la biellette 24 sur le doigt 32.

Dans ce montage, le point de rotation de la biellette est situé au niveau du contact de la partie médiane de la bague 40 avec le doigt radial 32.

Lorsque la biellette est reliée à un pontet 22, le doigt 32 s'étend radialement vers l'extérieur par rapport à la biellette et la disposition est symétrique de celle représentée en figure 4 par rapport à la biellette, mais le point de rotation de la biellette est toujours situé dans la zone de contact de la partie médiane de la bague 40 avec le doigt radial 32 et se trouve donc à la même distance de l'axe de rotation de l'anneau de commande 18.

Dans la variante de réalisation représentée schématiquement aux figures 5 et 6, le doigt radial 32 est fixé dans un élément 20 ou un pontet 22 de l'anneau de commande par sertissage de l'une 42 de ses extrémités et comporte dans sa partie médiane une collerette 44 d'appui sur un épaulement de l'élément 20 ou du pontet 22. La biellette correspondante 24 est montée au moyen d'une bague 40 du type précité sur la partie d'extrémité 46 du doigt 32 opposée à son extrémité évasée 42 de sertissage.

Lorsque la biellette 24 est reliée à un élément semi-circulaire 20 de l'anneau de commande comme représenté en figure 5, c'est l'extrémité radialement intérieure du doigt 32 qui est sertie sur l'élément 20 et c'est son extrémité radialement extérieure qui est engagée dans la bague 40 de l'extrémité de la biellette 24. Au contraire, quand la biellette 24 est reliée à un pontet 22, c'est l'extrémité radialement extérieure du doigt radial 32 qui est sertie sur le pontet et c'est la partie d'extrémité radialement intérieure de ce doigt qui est engagée dans la bague 40 de l'extrémité de la biellette 24.

Dans la variante de réalisation représentée aux figures 7 et 8, le montage est sensiblement le même que celui des figures 5 et 6 et comprend une pièce supplémentaire de retenue de la biellette 24 sur la partie d'extrémité 46 du doigt radial 32, cette pièce de retenue 48 étant par exemple formée d'une tôle pliée en U et comportant une aile 50 percée d'un trou d'engagement sur l'extrémité 46 du doigt radial 32 et une autre aile parallèle 52 qui comporte un orifice de passage du doigt 32 et qui est destinée à s'appliquer sur la collerette 44 de ce doigt, cette collerette se trouvant ainsi entre les deux ailes 50 et 52 de la pièce 48.

Pour le montage, la pièce 48 est ouverte, le doigt 32 est engagé dans l'orifice de l'aile 52, puis est mis en place dans son logement cylindrique de l'anneau de commande 18 et est serti à son extrémité 42, après quoi la bague 40 de la biellette 24 est engagée sur la partie d'extrémité 46 du doigt 32 et l'aile 50 est rabattue pour être sensiblement parallèle à l'aile 52, l'extrémité du doigt radial 32 s'engageant dans l'orifice correspondant de l'aile 50.

Les modes de réalisation des figures 5 à 8 ont l'avantage d'être moins lourds que le mode de réalisation de la figure 4, le gain de poids étant par exemple de l'ordre de 0,72 kg pour le mode de réalisation de la figure 5 et de 0,65 kg pour celui de la figure 7, pour chaque rangée d'aubes à calage variable.

Un avantage de l'invention est que les biellettes 24 d'une rangée d'aubes à calage variable sont identiques et déplacent angulairement les aubes d'un même angle pour une rotation donnée de l'anneau de commande, que ces biellettes soient reliées aux éléments semi-circulaires ou aux pontets de l'anneau.

## Revendications

1. Dispositif de commande d'aubes à calage variable dans une turbomachine, ces aubes comprenant des pivots radiaux (26) montés dans des paliers d'un carter (10) et reliés par des biellettes (24) à un anneau de commande (18) entourant extérieurement le carter (10), cet anneau comprenant deux éléments (20) sensiblement semi-circulaires reliés rigidement l'un à l'autre à leurs extrémités par des pontets (22) disposés à cheval sur des brides longitudinales (14) du carter, **caractérisé en ce que** les biellettes (24) sont montées à rotation sur des extrémités de doigts radiaux (32) portés par les éléments semi-circulaires (20) et les pontets (22) de l'anneau de commande (18) et **en ce que** les doigts (32) portés par les éléments semi-circulaires (10) s'étendent radialement à l'extérieur de ces éléments, et les doigts (32) portés par les pontets (22) s'étendent radialement à l'intérieur de ces pontets (22) de sorte que les points de rotation des biellettes (24) sur ces doigts (32) sont à une même distance de l'axe de rotation de l'anneau de commande (18), pour les doigts radiaux (32) portés par les éléments semi-circulaires (20) et pour ceux portés par les pontets (22) de l'anneau de commande.

2. Dispositif selon la revendication 1, **caractérisé en ce que** les biellettes (24) sont montées de façon rotulante sur les doigts radiaux (32).

3. Dispositif selon la revendication 1 ou 2, **caractérisé en ce que** les doigts radiaux (32) sont montés dans des logements cylindriques radiaux des éléments semi-circulaires (20) et des pontets (22) et y sont maintenus par des pattes coudées (36) fixées par des vis (38) sur lesdits éléments (20) et pontets (22) et coopérant avec les extrémités des doigts (32) sur lesquelles sont montées les biellettes (24).

4. Dispositif selon l'une des revendications précédentes, **caractérisé en ce que** les doigts radiaux (32) sont sertis à leurs extrémités (42) opposées aux biellettes dans des logements cylindriques des éléments semi-circulaires (20) et des pontets (22) de l'anneau de commande.

5. Dispositif selon la revendication 4, **caractérisé en ce que** des moyens (48) de retenue des biellettes (24) sont montés sur les doigts radiaux (32).

6. Dispositif selon la revendication 5, **caractérisé en ce que** les moyens (48) de retenue comprennent des pièces en U dont les ailes (50, 52) comportent des orifices de passage des doigts radiaux (32) et se trouvent de part et d'autre d'une collerette (44) des doigts radiaux (32).

## Claims

1. A device for controlling variable-pitch vanes in a turbomachine, the vanes having radial pivots (26) mounted in bearings in a casing (10) and connected by links (24) to a control ring (18) surrounding the outside of the casing (10), said ring comprising two substantially semicircular elements (20) rigidly interconnected at their ends by bridges (22) disposed astride longitudinal flanges (14) of the casing, the device being **characterized in that** the links (24) are pivotally mounted on the ends of radial fingers (32) carried by the semicircular elements (20) and by the bridges (22) of the control ring (18), and **in that** the fingers (32) carried by the semicircular elements (10) extend radially outwards from said elements, and the fingers (32) carried by the bridges (22) extend radially inwards from said bridges (22) so that the pivot points of the links (24) on said fingers (32) are at the same distance from the pivot axis of the control ring (18) both for the radial fingers (32) carried by the semicircular elements (20) and for the radial fingers carried by the bridges (22) of the control ring.

2. A device according to claim 1, **characterized in that** the links (24) are mounted in ball-and-socket manner on the radial fingers (32).

3. A device according to claim 1 or claim 2, **characterized in that** the radial fingers (32) are mounted in radial cylindrical housings of the semicircular elements (20) and of the bridges (22), and they are held therein by angled tabs (36) fixed by screws (38) to said elements (20) and bridges (22) and co-operating with the ends of the fingers (32) on which the links (24) are mounted.

4. A device according to any preceding claim, **characterized in that** the radial fingers (32) are crimped at their ends (42) remote from the links in cylindrical housings of the semicircular elements (20) and of the bridges (22) of the control ring.

5. A device according to claim 4, **characterized in that** means (48) for retaining the links (24) are mounted on the radial fingers (32).

6. A device according to claim 5, **characterized in that** the retaining means (48) comprise U-shaped pieces having flanges (50, 52) with orifices for passing the radial fingers (32) and located on either side of respective collars (44) on the radial fingers (32).

## Patentansprüche

1. Steuervorrichtung für Schaufeln mit verstellbarer Anstellung in einem Turbotriebwerk wobei diese Schaufeln radial verlaufende Drehzapfen (26) aufweisen, die in Lagem eines Gehäuses (10) eingebaut und durch Stangen (24) mit einem Steuerring (18) verbunden sind, der sich außen um das Gehäuse (10) herum erstreckt, wobei dieser Ring zwei im Wesentlichen halbkreisförmige Elemente (20) umfasst, die an ihren Enden starr miteinander verbunden sind, und zwar durch Stege (22), die rittlings auf Längsflanschen (14) des Gehäuses angeordnet sind,
**dadurch gekennzeichnet,**
**dass** die Stangen (24) drehbar an Enden von radial verlaufenden Fingern (32) angebracht sind, welche an den halbkreisförmigen Elementen (20) und an den Stegen (22) des Steuerrings (18) sitzen, und dass die von den halbkreisförmigen Elementen (20) getragenen Finger (32) sich radial außerhalb dieser Elemente erstrecken, und die von den Stegen (22) getragenen Finger (32) sich radial innerhalb dieser Stege (22) erstrecken, so dass die Drehpunkte der Stangen (24) an diesen Fingern (32) sich in einem und demselben Abstand von der Drehachse des Steuerrings (18) befinden, und zwar was die von den halbkreisförmigen Elementen (20) getragenen, radial verlaufenden Finger (32) und die von den Stegen (22) des Steuerrings getragenen Finger (32) betrifft.

2. Vorrichtung nach Anspruch 1,
**dadurch gekennzeichnet,**
**dass** die Stangen (24) drehbar an den radial verlaufenden Fingern (32) angebracht sind.

3. Vorrichtung nach Anspruch 1 oder 2,
**dadurch gekennzeichnet,**
**dass** die radial verlaufenden Finger (32) in radial verlaufenden zylinderförmigen Aufnahmen der halbkreisförmigen Elemente (20) und der Stege (22) angebracht sind und dort durch umgebogene Laschen (36) festgehalten werden, die mit Schrauben (38) an diesen Elementen (20) und Stegen (22) befestigt sind und mit den Enden der Finger (32) zusammenwirken, an denen die Stangen (24) angebracht sind.

4. Vorrichtung nach einem der vorherigen Ansprüche,
**dadurch gekennzeichnet,**
**dass** die oben genannten radial verlaufenden Finger (32) mit ihren von den Stangen ab gewandten Enden (42) durch Quetschverbindung in zylinderförmigen Aufnahmen der halbkreisförmigen Elemente (20) und der Stege (22) des Steuerrings angebracht sind.

5. Vorrichtung nach Anspruch 4,
**dadurch gekennzeichnet,**
**dass** Haltemittel (48) für die Stangen (24) an den radial verlaufenden Fingern (32) angebracht sind.

6. Vorrichtung nach Anspruch 5,
**dadurch gekennzeichnet,**
**dass** die Haltemittel (48) U-förmige Werkstücke umfassen, deren Schenkel (50, 52) Durchlassöffnungen für die radial verlaufenden Finger (32) aufweisen und sich beiderseits eines Bundes (44) der radial verlaufenden Finger (32) befinden.
